# EUROPÄISCHE PATENTSCHRIFT

(11) **EP 0 479 722 B1**
(45) Veröffentlichungstag und Bekanntmachung des Hinweises auf die Patenterteilung: **13.11.1996**
(21) Anmeldenummer: 91810749.1
(22) Anmeldetag: 24.09.1991
(51) Int. Cl.: C08G 73/10, C08G 73/12, C08L 79/08, C08L 79/06, C08L 63/00

(54) **Lösliche Polyimide**
Soluble polyimides
Polyimides solubles

(30) Priorität: 02.10.1990 CH 3209/90
(43) Veröffentlichungstag der Anmeldung: 08.04.1992
(73) Patentinhaber: CIBA-GEIGY AG, 4002 Basel (CH)
(72) Erfinder: Kramer, Andreas, Dr., CH-3186 Düdingen (CH); Wolf, Jean-Pierre, Dr., CH-1791 Courtaman (CH); Brunner, Rudolf, Dr., CH-1782 Belfaux (CH)

(56) Entgegenhaltungen:
- EP-A- 0 134 752
- EP-A- 0 317 754
- EP-A- 0 350 203

## Beschreibung

Die vorliegende Erfindung betrifft neue lösliche Polyimide, ein Verfahren zu deren Herstellung sowie deren Verwendung als Zähigkeitsverbesserer in Bismaleinimid-, Epoxid- und Triazinharzsystemen.

Epoxid- und Bismaleinimidharze zeichnen sich durch überragende Hochtemperatureigenschaften aus, haben jedoch den Nachteil, dass sie nach der Härtung relativ spröde sind.
In Polymer 30, 213 (1989) wird die Verwendung eines thermoplastischen Polyetherimids (Ultem® 1000, General Electric) als Zähigkeitsverbesserer (Toughener) in Epoxidharzen beschrieben.
Als Toughener für Bismaleinimid-Systeme (33th Intern. SAMPE Symp. 1988, 1546) werden Polyethersulfone (Udel® P 1700, UCC), Polyetherimide (Ultem® 1000, General Electric) und Polyhydantoine (PH 10, Bayer) verwendet, die jedoch nicht alle Anforderungen bezüglich Glasübergangstemperatur, mechanischer Eigenschaften und Kompatibilität mit dem Basisharz erfüllen.
Die EP-A-315 216 offenbart Polyimide aus aromatischen Tetracarbonsäuren und aromatischen Diaminen, deren Verwendung als Toughener für Bismaleinimid-Systeme durch das relativ hohe Molekulargewicht beschränkt ist.
Als Toughener für Triazinharzsysteme (18th International SAMPE Technical Conference 1986, 851 - 861) werden Polyetherimide (Ultem® 1000, General Electric), Polyethersulfone (Udel® P 1700, UCC) und Polyarylate (Ardel® D100, Durel® 400) verwendet.
Gegenstand der vorliegenden Erfindung sind lösliche Homo- oder Copolyimide der Formel I, 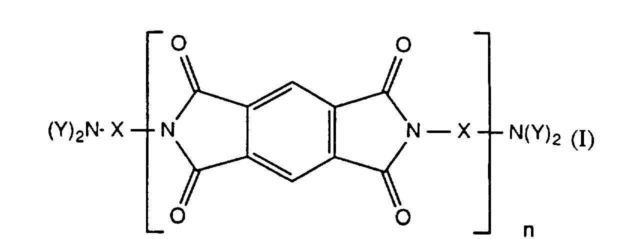 worin Y für Wasserstoff steht oder die an ein N-Atom gebundenen Substituenten Y zusammen einen zweiwertigen Rest der Formeln IIa bis IIc darstellen. 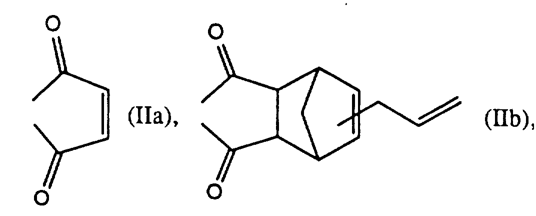 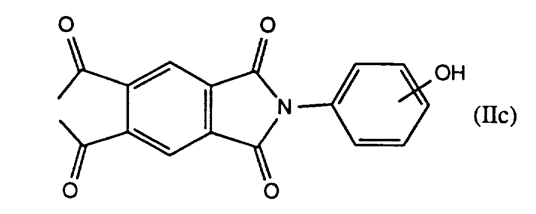 und X für einen Rest der Formel IIIa und/oder IIIb steht, 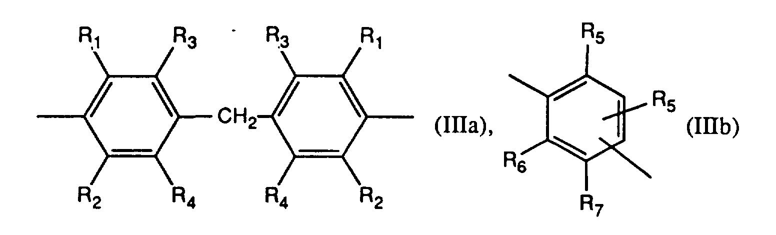 worin R₁ eine Alkyl-, Cycloalkyl-, Alkoxy-, Alkoxyalkyl- oder Aralkylgruppe darstellt oder zusammen mit dem Rest am benachbarten C-Atom einen Alkylenrest bildet, R₂ Wasserstoff ist oder eine der für R₁ angegebenen Bedeutungen hat, R₃ und R₄ unabhängig voneinander Wasserstoffatome sind oder zusammen mit R₁ bzw. R₂ einen Alkylenrest bilden, R₅ und R₆ unabhängig voneinander Alkyl-, Cycloalkyl-, Alkoxy-, Alkoxyalkyl- oder Aralkylgruppen darstellen oder zusammen mit einem Rest an einem benachbarten C-Atom einen Alkylenrest bilden, R₇ Wasserstoff ist oder eine der für R₅ und R₆ angegebenen Bedeutungen hat,
und worin n eine ganze Zahl zwischen 5 und 150 ist.

Die Substituenten R₁, R₂, R₅, R₆ und R₇ können lineares oder verzweigtes Alkyl und Alkoxy mit 1 bis 20, bevorzugt 1 bis 6 und besonders bevorzugt 1 bis 4 C-Atomen, lineares oder verzweigtes Alkoxyalkyl mit 2 bis 12, insbesondere 2 bis 6 C-Atomen, bevorzugt Alkoxymethyl, Alkylen mit 3 oder 4 C-Atomen, Cycloalkyl mit 5 bis 8, insbesondere 5 oder 6 Ringkohlenstoffatomen und Aralkyl mit 7 bis 12 C-Atomen, bevorzugt Benzyl, sein.

Beispiele für derartige Substituenten sind: Methyl, Ethyl, Propyl, Isopropyl, n-Butyl, i-Butyl, t-Butyl, Pentyl, Hexyl, Octyl, Dodecyl, Tetradecyl, Eicosyl, Cyclopentyl, Cyclohexyl, Methylcyclohexyl, Methoxy, Ethoxy, Propoxy, Butoxy, Pentoxy, Hexoxy, Methoxymethyl, Methoxyethyl, Ethoxymethyl, Propoxymethyl, Butoxymethyl, Benzyl, Methylbenzyl, und Phenylethyl. Bevorzugte Reste sind Methoxymethyl, Ethoxymethyl, Methyl, Ethyl, Isopropyl, Trimethylen und Tetramethylen. Besonders bevorzugt sind Isopropyl, Ethyl und insbesondere Methyl.

In den Polyimiden der Formel I ist n bevorzugt eine Zahl zwischen 10 und 70.

Bevorzugt sind Copolyimide der Formel I, worin das Strukturelement X zu 20 - 80 mol% aus einer Gruppe der Formel IIIa und zu 80 - 20 mol% aus einer Gruppe der Formel IIIb besteht.

R₃ und R₄ in den Gruppen der Formel IIIa sind bevorzugt Wasserstoff.

Die Reste R₁ und R₂ in den Gruppen der Formel IIIa stellen vorzugsweise (C₁-C₆)-Alkylgruppen, insbesondere Methyl-, Ethyl-, n-Propyl- oder Isopropylgruppen dar.

Besonders bevorzugt sind Polyimide der Formel I, worin in der Gruppe der Formel IIIa R₁ Ethyl und R₂ Methyl ist und R₃ und R₄ jeweils Wasserstoff bedeuten oder worin R₁ Ethyl ist und R₂, R₃ und R₄ jeweils Wasserstoff bedeuten.

In den Gruppen der Formel IIIb stehen die freien Bindungen bevorzugt in meta-Stellung zueinander, wobei R₅ Ethyl, R₆ Methyl und R₇ Wasserstoff sind.

Des weiteren sind Polyimide mit Gruppen der Formel IIIb bevorzugt, worin die freien Bindungen in para-Stellung zueinander stehen und R₅, R₆ und R₇ jeweils Methyl sind.

Besonders bevorzugt sind Gruppen der Formel IIIb mit den freien Bindungen in meta-Stellung, worin R₅ Ethyl, R₆ Methyl und R₇ Wasserstoff ist.

Die Homo- oder Copolyimide der Formel I können nach an sich bekannten Methoden hergestellt werden, beispielsweise indem man ein aromatisches Diamin der Formel IVa oder IVb, 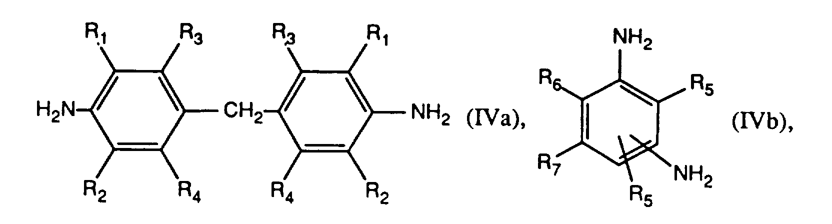 worin die Reste R₁ bis R₇ die oben angegebene Bedeutung haben, oder ein Gemisch der Diamine der Formeln IVa und IVb mit Pyromellitsäuredianhydrid allein oder mit einem Gemisch aus Pyromellitsäuredianhydrid und einer Verbindung ausgewählt aus der Gruppe bestehend aus Maleinsäureanhydrid, Allylnadicanhydrid und Aminophenol umsetzt und die erhaltene Polyamidsäure unter Zugabe eines Schleppmittels thermisch imidisiert.

Die Diamine der Formeln IVa oder IVb oder das Gemisch der Diamine der Formeln IVa und IVb werden vorzugsweise in etwa äquimolaren Mengen bezogen auf das Pyromellitsäuredianhydrid eingesetzt.
Unter etwa äquimolaren Mengen versteht man im Falle der Herstellung von Polyimiden der Formel I mit NH₂-Endgruppen ein Molverhältnis des Diamins der Formel IVa oder IVb oder des Gemisches der Diamine der Formel IVa und IVb zu Pyromellitsäuredianhydrid von 1,3:1,0 bis 1,01:1,0.

Werden Polyimide der Formel I mit Endgruppen -N(Y₂), worin die Reste Y eine Gruppe der Formeln IIa oder IIb darstellen, hergestellt, so werden die Diamine der Formel IVa oder IVb oder das Gemisch der Diamine der Formel IVa und IVb und das Pyromellitsäuredianhydrid bevorzugt im oben angegebenen Verhältnis eingesetzt. Zusätzlich werden gegen Ende der Kondensationsreaktion 1 - 40 mol % (bezogen auf die Diaminkomponente) Maleinsäureanhydrid oder Allylnadicanhydrid zugegeben.

Zur Synthese von Polyimiden der Formel I mit Endgruppen -N(Y₂), worin die Reste Y eine Gruppe der Formeln IIc darstellen, wird Pyromellitsäuredianhydrid bevorzugt im leichten Überschuss (101 bis 130 mol %), bezogen auf die Diaminkomponente(n), eingesetzt. Gegen Ende der Kondensationsreaktion werden zusätzlich 1 - 40 mol % (bezogen auf Pyromellitsäuredianhydrid) Aminophenol zugegeben.

Die Polykondensationsreaktion wird vorzugsweise in einem aprotisch polaren Lösungsmittel, wie beispielsweise Dimethylsulfoxid, Dimethylformamid, Dimethylacetamid, Diethylacetamid und insbesondere N-Methylpyrrolidon, durchgeführt, und die Polyamidsäure wird durch Zugabe von Toluol, Chlorbenzol oder insbesondere Xylol als Schleppmittel thermisch imidisiert.

Die Diamine der Formeln IVa und IVb sind bekannt und kommerziell erhältlich oder nach bekannten Verfahren herstellbar.

Beispiele für Diamine der Formel IVa sind:
3,3′-Dimethyl-4,4′-diaminodiphenylmethan, 3,3′-Diethyl-4,4′-diaminodiphenylmethan,
3,3′-Diisopropyl-4,4′-diaminodiphenylmethan, 3,3′,5,5′-Tetramethyl-4,4′-diaminodiphenylmethan, 3,3′,5,5′-Tetraethyl-4,4′-diaminodiphenylmethan,
3,3′-Diethyl-5,5′-dimethyl-4,4′-diaminodiphenylmethan,
3,3′-Diisopropyl-5,5′dimethyl-4,4′-diaminodiphenylmethan,
3,3′-Diisopropyl-5,5′diethyl-4,4′-diaminodiphenylmethan.

Beispiele für Diamine der Formel IVb sind:
2,4,6-Trimethyl-1,3-phenylendiamin, 2,4-Diethyl-6-methyl-1,3-phenylendiamin,
5-Ethyl-2,4-dimethyl-1,3-phenylendiamin,2,4,5,6-Tetramethyl-1,3-phenylendiamin,
2,4,6-Triethyl-1,3-phenylendiamin,2,3,6-Trimethyl-1,4-phenylendiamin,
2,3-Diethyl-6-methyl-1,4-phenylendiamin,6-Ethyl-2,3-dimethyl-1,4-phenylendiamin,
2,3,5,6-Tetramethyl-1,4-phenylendiamin, 2,3,6-Triethyl-1,4-phenylendiamin.

Die erfindungsgemässen Polyimide mit reaktiven Endgruppen weisen sehr hohe Glasübergangstemperaturen auf und sind in gebräuchlichen organischen Lösungsmitteln, insbesondere in halogenierten Kohlenwasserstoffen, gut löslich.

Aufgrund ihrer ausgezeichneten Kompatibilität mit Epoxid-, Bismaleinimid- oder Triazinharzsystemen eignen sich die erfindungsgemässen Verbindungen als Mittel zur Verbesserung der Zähigkeit dieser Harze.

Gegenstand der vorliegenden Erfindung sind somit auch Zusammensetzungen enthaltend
a) mindestens ein Epoxid-,Bismaleinimid- oder Triazinharz
b) einen Härter und/oder Härtungsbeschleuniger für Epoxid-, Bismaleinimid- oder Triazinharze
c) ein Polyimid der Formel I.

Beispiele für Epoxidharze sind:
I) Polyglycidyl- und Poly(β-methylglycidyl)ester erhältlich durch Umsetzung einer Verbindung mit mindestens zwei Carboxylgruppen im Molekül und Epichlorhydrin bzw. β-Methyl-epichlorhydrin. Die Umsetzung erfolgt zweckmässig in der Gegenwart von Basen.
   Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl- oder Poly(β-methylglycidyl)ether erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.
   Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.
   Sie leiten sich aber auch beispielsweise ab von cycloaliphatischen Alkoholen, wie 1,4-Cyclohexandimethanol, Bis(4-hydroxycyclohexyl)methan oder 2,2-Bis(4-hydroxycyclohexyl)propan, oder sie besitzen aromatische Kerne, wie N,N-Bis(2-hydroxyethyl)anilin oder p,p'-Bis(2-hydroxyethylamino)diphenylmethan.
   Die Epoxidverbindungen können sich auch von einkerningen Phenolen ableiten, wie beispielsweise von Resorcin oder Hydrochinon; oder sie basieren auf mehrkernigen Phenolen, wie beispielsweise Bis(4-hydroxyphenyl)methan, 4,4'-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan, 2,2-Bis(3,5-dibrom-4-hydroxyphenyl)propan sowie von Novolaken erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenyl, 2-Methylphenol oder 4-tert-Butylphenol oder durch Kondensation mit Bisphenolen, so wie oben beschrieben.
III) Poly(N-glycidyl)verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(-4-aminophenyl)methan, m-Xylylendiamin oder Bis(4-methylaminophenyl)methan. Zu den Poly(N-glycidyl)verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Poly(S-glycidyl)verbindungen, beispielsweise Di-S-glycidylderivate, die sich von Dithiolen, wie beispielsweise Ethan-1,2-dithiol oder Bis(4-mercaptomethylphenyl)ether ableiten.
V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexancarboxylat.
   Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis(5,5-dimethyl-1-glycidylhydantoin-3-yl)propan.
   Bevorzugt verwendet werden Epoxidharze mit einem Epoxidgehalt von 2 bis 10 Aequivalenten/kg, welche Glycidylether, Glycidylester oder N-Glycidylderivate von aromatischen, heterocyclischen, cycloaliphatischen oder aliphatischen Verbindungen sind.
   Besonders bevorzugt als Epoxidharze werden Polyglycidylether von mehrwertigen Phenolen, wie beispielsweise von 2,2-Bis(4-hydroxyphenyl)propan (Bisphenol A) oder Bis(4-hydroxyphenyl)methan (Bisphenol F) oder von Novolaken.
   Am meisten bevorzugt als Epoxidharze werden Diglycidylether von Bisphenol A, Epoxikresolnovolake oder 4,4′-Diaminodiphenylmethan-Tetraglycidylderivate.

Beispiele für Bismaleinimidharze sind u.a in der DE-OS 2 627 045 beschrieben. Als spezielle Beispiele für bekannte Bismaleinimide, welche für die erfindungsgemässen Zusammensetzungen geeignet sind, seien die folgenden Substanzen genannt: N,N′-Ethylen-bismaleinimid, N,N′-Hexamethylen-bismaleinimid, N,N′-Trimethylhexylen-bis-maleinimid, N,N′-m-Phenylen-bismaleinimid, N,N′-4,4′-Diphenylmethan-bismaleinimid, N,N′-4,4′-Diphenylether-bismaleinimid, N,N′-(1,5,5-Trimethylcyclohexylen-1,3)-bis-maleinimid, N,N-4,4′-Dicyclohexylmethan-bismaleinimid, N,N′-p-Xylylen-bismaleinimid, N,N′-4,4′-Di-(2-ethyl-6-methylphenyl)-methan-bismaleinimid, N,N′-4,4′-Di-(2,6-dimethylphenyl)-methan-bismaleinimid, N,N′-4,4′-Di-(2,6-diethylphenyl)-methan-bismaleinimid, N,N′-4,4′-Di-(2,6-diisopropylphenyl)-methan-bismaleinimid, N,N′-4,4′-Di-(2-ethyl-6-isopropylphenyl)-methan-bismaleinimid, N,N′-4,4′-Di-(3-chlor-2,6-diethylphenyl)-methan-bismaleinimid. Besonders bevorzugt ist Methylen-bis-(phenylmaleinimid).

Beispiele für Triazinharze sind Polycyanurate, wie sie beispielsweise in ACS Meeting, New York, April 1986, PMSE Preprints, S. 107 - 113, beschrieben werden oder die in Makromol. Chem. 120, 68 (1968) beschriebenen Melamin-Formaldehyd-Harze.

Beispiele für Härter für Epoxidharze sind aliphatische, cycloaliphatische, aromatische und heterocyclische Amine wie Bis-(4-aminophenyl)-methan, Anilin-Formaldehyd-Harze, Bis-(4-aminophenyl)-sulfon, Propan-1,3-diamin, Hexamethylendiamin, Diethylentriamin, Triethylentetramin, 2,2,4-Trimethylhexan-1,6-diamin, m-Xylylendiamin, Bis-(4-aminocyclohexyl)methan, 2,2-(4-aminocyclohexyl)-propan, und 3-Aminomethyl-3,5,5-trimethylcyclohexylamin (Isophorondiamin); Polyaminoamide wie beispielsweise solche aus aliphatischen Polyaminen und dimerisierten oder trimerisierten Fettsäuren; Polyphenole, wie Resorcin, Hydrochinon, 2,2-Bis(4-hydroxyphenyl)propan (Bisphenol A) und Phenol-Aldehyd-Harze; Polythiole, wie die im Handel unter der Bezeichnung "Thiokole®" erhältliche Polythiole; Polycarbonsäuren und ihre Anhydride, wie z.B. Phthalsäureanhydrid, Tetrahydrophthalsäureanhydrid, Hexahydrophthalsäureanhydrid, Hexachlorendomethylentetrahydrophthalsäureanhydrid, Pyromellitsäuredianhydrid, Benzophenon-3,3′,4,4′-tetracarbonsäuredianhydrid, die Säuren der zuvor genannten Anhydride sowie auch Isophthalsäure und Terephthalsäure. Es können auch katalytisch wirkende Härtungsmittel verwendet werden, wie beispielsweise tertiäre Amine [z.B. 2,4,6-Tris-(dimethylaminoethyl)phenol]; Imidazole oder Mannich-Basen; Alkalimetallalkoholate (z.B. Na-Alkoholat von 2,4-Dihydroxy-3-hydroxymethylpentan); Zinnsalze von Alkansäuren (z.B. Zinnoctanoat); Friedel-Crafts-Katalysatoren, wie Bortrifluorid und Bortrichlorid und ihre Komplexe und Chelate, die durch Umsetzung von Bortrifluorid mit z.B. 1,3-Diketonen erhalten werden; sowie Amidine, insbesondere Dicyandiamid.

Beispiele für Härtungsbeschleuniger für Epoxidharze sind tertiäre Amine, deren Salze oder quarternäre Ammoniumverbindungen wie Benzyldimethylamin, 2,4,6-Tris-(dimethylaminomethyl)phenol, 1-Methylimidazol, 2-Ethyl-4-methylimidazol, 4-Aminopyridin, Tripentylammoniumphenolat oder Tetramethylammoniumchlorid; oder Alkalimetallalkoholate, wie Na-Alkoholat von 2,4-Dihydroxy-3-hydroxymethylpentan; oder substituierte Harnstoffe, wie N-(4-Chlorphenyl)-N′,N′-dimethylharnstoff oder N-(3-Chlor-4-methylphenyl)-N′,N′-dimethylharnstoff (Chlortoluron).

Härter für Bismaleinimidharze sind beispielsweise die in der DE-OS 2 627 045 genannten Alkenylphenole oder Alkenylphenolether, wie z.B. o,o′-Diallyl-bisphenol A, o,o′-Diallyl-bisphenol F, 4,4′-Dihydroxy-3,3′-diallyl-diphenyl, Bisphenol A-diallylether, Bisphenol F-diallylether, 4,4′-Diallyloxy-diphenyl. Ebenso sind die entsprechenden Methallylverbindungen verwendbar. Bevorzugt ist o,o′-Diallyl-bisphenol A.

Als Härtungsbeschleuniger für Bismaleinimidharze können beispielsweise ionische und radikalische Katalysatoren eingesetzt werden. Unter den ionischen Katalysatoren eignen sich besonders tertiäre, sekundäre oder primäre Amine oder Amine, welche mehrere verschiedenartige Aminogruppen enthalten (z.B. gemischte tertiär-sekundäre Amine) und quarternäre Ammoniumverbindungen. Diese Amin-Katalysatoren können sowohl Monoamine als auch Polyamine sein. Im Falle der Verwendung von primären und sekundären Aminen sind Monoamine zu bevorzugen. Als Beispiele solcher Amin-Katalysatoren sind die folgenden Substanzen aufzuzählen: Diethylamin, Tributylamin, Triethylamin, Triamylamin, Benzylamin, Tetramethyldiaminodiphenylmethan, N,N-Diisobutylaminoacetonitril, N,N-Dibutylaminoacetonitril, heterocyclische Basen, wie Chinolin, N-Methylpyrrolidin, Imidazol, Benzimidazol und deren Homologe oder Mercaptobenzothiazol. Als geeignete quaternäre Ammoniumverbindungen sind beispielsweise Benzyltrimethylammoniumhydroxid und Benzyltrimethylammoniummethoxid zu nennen.
Weitere geeignete ionische Katalysatoren sind Alkalimetallverbindungen, wie Alkalialkoholate und -hydroxide. Besonders gut geeignet ist Natriummethylat. Als radikalische Polymerisationskatalysatoren eignen sich die bekannten organischen Peroxide und Hydroperoxide sowie Azoisobutyronitril. Weitere Polymerisationskatalysatoren sind Acetylacetonate, insbesondere die Acetylacetonate der Übergangsmetalle.

Die erfindungsgemässen Zusammensetzungen enthalten vorzugsweise 1 - 50 Gew.%, insbesondere 5 - 30 Gew.%, der Komponente c), bezogen auf die Komponente a).

Mit den erfindungsgemässen Polyimiden modifizierte Bismaleinimidharze weisen nach der Härtung sehr hohe Glasübergangstemperaturen und hohe Dehnbarkeiten und Bruchzähigkeiten auf. Die mechanischen Eigenschaften des Harzes bleiben auch bei hohem Anteil an Polyimid (>10 Teile auf 100 Teile Bismaleinimid) erhalten, und es tritt keine nachteilige Phasenentmischung auf.

### Herstellungsbeispiele

### Beispiel 1

In einem 4,5l Sulfierkolben, ausgerüstet mit Rührer, Thermometer, Wasserabscheider, Kühler und Gaseinleitungsrohr werden zu einer Lösung von 247,1 g (0,875 mol) 3,3′-Diethyl-5,5′-dimethyl-4,4′-diaminodiphenylmethan und 66,86 g (0,375 mol) 2,4-Diethyl-6-methyl-1,3-phenylendiamin in 1,5l N-Methylpyrrolidon (NMP) bei 5°C 261,72g ( 1,2 mol) pyromellitsäuredianhydrid über den Zeitraum einer Stunde in 4 Portionen zugegeben. Nach zwei Stunden wird das Eisbad entfernt und die Reaktionslösung über Nacht bei Raumtemperatur unter Stickstoff gerührt. Zur Reaktionslösung werden 750 ml Xylol gegeben und unter Rückfluss wird Wasser am Wasserabscheider azeotrop abgetrennt. Nach beendeter Wasserabscheidung wird das Xylol aus dem Reaktionskolben abdestilliert und die noch warme Reaktionslösung unter kräftigem Rühren auf 15l Wasser gegossen. Der Niederschlag wird abfiltriert, ein zweites Mal in 5l Wasser gemixt, filtriert und im Vakuum bei 100 °C getrocknet. Es werden 526 g (98 %) eines gelben Granulates erhalten, das in Methylenchlorid klar löslich ist, mit einem durch Gelpermeationschromatographie (GPC) in Tetrahydrofuran ermittelten Molekulargewicht von 13300 (Zahlenmittel Mₙ) und 35380 (Gewichtsmittel M_{w}). Der Amingehalt (Titration in Phenol/Chloroform mit 0,1 N HClO₄) beträgt 0,19 mÄq./g. Die Glasumwandlungstemperatur T_{g}, gemessen durch Differential-Scanning-Calorimetrie (DSC) beträgt 352 °C.

### Beispiel 2

Analog Beispiel 1 werden aus 176,5 g (0,625 mol) 3,3′-Diethyl-5,5′-dimethyl-4,4′-diaminodiphenylmethan, 111,43 g (0,625 mol), 2,4-Diethyl-6-methyl-1,3-phenylendiamin und 261,72 g (1,2 mol) pyromellitsäuredianhydrid 487 g (96 %) eines gelben Granulats erhalten, das in Methylenchlorid klar löslich ist, mit einem durch GPC ermittelten Molekulargewicht von 9060 (Zahlenmittel Mₙ) bzw. 43640 (Gewichtsmittel M_{w}).
Der Amingehalt (Titration in Phenol/Chloroform mit 0,1 N HClO₄) beträgt 0,24 mÄq./g.

### Beispiel 3

Analog Beispiel 1 werden aus 222,72 g (0,875 mol) 3,3′-Diethyl-4,4′-diaminodiphenylmethan, 66,86 g (0,375 mol), 2,4-Diethyl-6-methyl-1,3-phenylendiamin und 261,72 g (1,2 mol) Pyromellitsäuredianhydrid 501 g (98 %) eines gelben Granulats erhalten, das in Methylenchlorid klar löslich ist, mit einem durch GPC ermittelten Molekulargewicht von 11100 (Zahlenmittel Mₙ) bzw. 34020 (Gewichtsmittel M_{w}). Der Amingehalt (Titration in Phenol/Chloroform mit 0,1 N HClO₄) beträgt 0,23 mÄq./g.

### Beispiel 4

Analog Beispiel 1 werden aus 247,1 g (0,875 mol) 3,3′-Diethyl-5,5′-dimethyl-4,4′-diaminodiphenylmethan, 66,86 g (0,375 mol), 2,4-Diethyl-6-methyl-1,3-phenylendiamin und 261,72 g (1,2 mol) Pyromellitsäuredianhydrid durch Fällen des Produktes in Methanol anstatt in Wasser 513 g (96 %) eines gelben Granulats erhalten, das in Methylenchlorid klar löslich ist, mit einem durch GPC ermittelten Molekulargewicht von Mₙ = 14260 und M_{w} = 45710.
Der Amingehalt (Titration in Phenol/Chloroform mit 0,1 N HClO₄) beträgt 0,165 mÄq./g.

### Beispiel 5

Analog Beispiel 1 werden aus 221,43 g (0,784 mol) 3,3′-Diethyl-5,5′-dimethyl-4,4′-diaminodiphenylmethan, 59,9 g (0,336 mol), 2,4-Diethyl-6-methyl-1,3-phenylendiamin
und 240 g (1,1 mol) Pyromellitsäuredianhydrid durch Fällen des Produktes in Methanol anstatt in Wasser 438 g (91 %) eines gelben Granulats erhalten, das in Methylenchlorid klar löslich ist, mit einem durch GPC ermittelten Molekulargewicht von Mₙ = 24570 und M_{w} = 93460.
Der Amingehalt (Titration in Phenol/Chloroform mit 0,1 N HClO₄) beträgt 0,08 mÄq./g.

### Beispiel 6

In einem 4,5l Sulfierkolben, ausgerüstet mit Rührer, Thermometer, Wasserabscheider, Kühler und Gaseinleitungsrohr werden zu einer Lösung von 247,1 g (0,875 mol) 3,3′-Diethyl-5,5′-dimethyl-4,4′-diaminodiphenylmethan und 66,86 g (0,375 mol) 2,4-Diethyl-6-methyl-1,3-phenylendiamin in 1,5l N-Methylpyrrolidon (NMP) bei 5 °C 261,72 g (1,2 mol) Pyromellitsäuredianhydrid über den Zeitraum einer Stunde in 4 Portionen zugegeben. Nach zwei Stunden wird das Eisbad entfernt und die Reaktionslösung über Nacht bei Raumtemperatur unter Stickstoff gerührt. Zur Reaktionslösung werden 750 ml Xylol gegeben und unter Rückfluss wird Wasser am Wasserabscheider azeotrop abgetrennt. Gegen Ende der Wasserabscheidung werden 14,78 g (0,15 mol) Maleinsäureanhydrid zugegeben. Nach vollständiger Wasserabscheidung wird das Xylol aus dem Reaktionskolben abdestilliert und die noch warme Reaktionslösung unter kräftigem Rühren auf 15l Methanol gegossen. Der Niederschlag wird abfiltriert, ein zweites Mal in 5l Methanol gemixt, filtriert und im Vakuum bei 80 °C getrocknet. Es werden 504 g (94 %) eines bräunlichen Granulats erhalten, das in Methylenchlorid klar löslich ist, mit einem durch Gelpermeationschromatographie (GPC) in Tetrahydrofuran ermittelten Molekulargewicht von Mₙ = 11670 bzw. M_{w} = 42510.
Die Hydrierung (in N,N-Dimethylacetamid mit Pd (10 %) auf Kohle) ergibt eine H₂-Aufnahme von 0,2 mmol H₂/g.

### Beispiel 7

Analog Beispiel 6 werden aus 247,1 g (0,875 mol) 3,3′-Diethyl-5,5′-dimethyl-4,4′-diaminodiphenylmethan, 66,86 g (0,375 mol), 2,4-Diethyl-6-methyl-1,3-phenylendiamin, 261,72 g (1,2 mol) Pyromellitsäuredianhydrid und 61,2 g (0,3 mol) Allylnadicanhydrid (Isomerengemisch aus 1-Allyl-5-norbornen-2,3-dicarbonsäureanhydrid und 5-Allyl-5-norbornen-2,3-dicarbonsäureanhydrid) 550 g (96 %) eines bräunlichen Granulats erhalten, das in Methylenchlorid klar löslich ist, mit einem durch GPC ermittelten Molekulargewicht von Mₙ = 9290 und M_{w} = 34470.
Die Hydrierung (in N,N-Dimethylacetamid mit Pd (10 %) auf Kohle) ergab eine H₂-Aufnahme von 0,4 mmol H₂/g.

### Beispiel 8

Analog Beispiel 6 werden aus 237,22 g (0,84 mol) 3,3′-Diethyl-5,5′-dimethyl-4,4′-diaminodiphenylmethan, 64,19 g (0,36 mol), 2,4-Diethyl-6-methyl-1,3-phenylendiamin, 272,63 g (1,25 mol) Pyromellitsäuredianhydrid und 10,91 g (0,1 mol) 4-Aminophenol 526 g (97 %) eines gelben Granulats erhalten, das in Methylenchlorid klar löslich ist, mit einem durch GPC ermittelten Molekulargewicht von Mₙ = 10140 und M_{w} = 28500.
Die Bestimmung der phenolischen OH-Gruppen ist wegen Instabilität der Substanz im stark alkalischen Bereich nicht möglich. Durch Subtraktion eines geringen Aminrestgehaltes lässt sich ein Phenolgehalt von 0,12 - 0,14 mÄq./g berechnen.

### Anwendungsbeispiele

### Beispiel A

Zu 75 Gewichtsteilen o,o′-Diallylbisphenol A gelöst in 100 ml Methylenchlorid werden 10 Gewichtsteile Polyimid mit einem Amingehalt von 0,19 mÄq./g (hergestellt nach Beispiel 1) eingebracht. Das Lösungsmittel wird bei 50 - 100 °C unter Rühren abdestilliert. Bei 100°C werden 100 Gewichtsteile Methylen-bis-phenylmaleinimid zugegeben und die Mischung bei 130 °C aufgeschmolzen. Es wird kwz im Vakuum entgast und die bei 130 °C gut giessbare Harzmischung in eine 4 mm dicke Metallform gegossen. Nach dem Aushärten (1h 180 °C, 2h 200 °C und 6h 250 °C) erhält man eine braune transparente Platte.

### Beispiel B

Analog Beispiel A wird eine Platte hergestellt aus 100 Teilen Methylen-bis-phenylmaleinimid, 75 Teilen o,o′-Diallylbisphenol A und 20 Teilen Polyimid mit einem Amingehalt von 0,08 mÄq./g (hergestellt nach Beispiel 5).

### Beispiel C

Analog Beispiel A wird eine Platte hergestellt aus 100 Teilen Methylen-bis-phenylmaleinimid, 75 Teilen o,o′-Diallylbisphenol A und 20 Teilen Polyimid mit Maleinimid-Endgruppen (hergestellt nach Beispiel 6).

### Beispiel D

Analog Beispiel A wird eine Platte hergestellt aus 100 Teilen Methylen-bis-phenylmaleinimid, 75 Teilen o,o′-Diallylbisphenol A und 30 Teilen Polyimid mit Allylnadicimid-Endgruppen (hergestellt nach Beispiel 7).

### Beispiel E

Analog Beispiel A wird eine Platte hergestellt aus 100 Teilen Methylen-bis-phenylmaleinimid, 75 Teilen o,o′-Diallylbisphenol A und 20 Teilen Polyimid mit Phenol-Endgruppen (hergestellt nach Beispiel 8).

Die Polymereigenschaften der so hergestellten Platten sind in Tabelle 1 dargestellt.

**Tabelle 1:**

| Beispiel | A | B | C | D | E |
|---|---|---|---|---|---|
| Glasübergangstemperatur T_{g} (TMA)/°C | 316 | 310 | 305 | 305 | 310 |
| Biegefestigkeit (ISO 178)/MPa | 182 | 158 | 164 | 159 | 154 |
| Randfaserdehnung (ISO 178)/% | 6,59 | 5,06 | 5,40 | 5,20 | 4,83 |
| Biegefestigkeit (ASTM E 399-789)/J/m² | 223 | 311 | 230 | 223 | 273 |

### Beispiel F

Zu 100 Gewichtsteilen Bis(4-hydroxyphenyl)methandiglycidylether gelöst in 100 ml Methylenchlorid werden 20 Gewichtsteile Polyimid mit einem Amingehalt von 0,19 mÄq./g (hergestellt nach Beispiel 1) eingebracht. Das Lösungsmittel wird bei 50 - 100 °C unter Rühren abdestilliert. Bei 100 °C werden 38 Gewichtsteile 4,4'-Diaminodiphenylsulfonzugegeben und die Mischung bei 120 °C aufgeschmolzen. Es wird kurz im Vakuum entgast und die bei 120 °C gut giessbare Harzmischung in eine 4 mm dicke Metallform gegossen. Nach dem Aushärten (2h 160 °C, 2h 180 °C) erhält man eine orangefarbene transparente Platte.

### Beispiel G

Analog Beispiel F wird eine Platte hergestellt aus 100 Gewichtsteilen Bis(4-hydroxyphenyl)methandiglycidylether, 36 Gewichtsteilen 4,4'-Diaminodiphenylsulfon und 10 Gewichtsteilen Polyimid mit einem Amingehalt von 0,08 mÅq./g (hergestellt nach Beispiel 5).

Die Polymereigenschaften der gemäss den Beispielen F und G hergestellten Platten sind in Tabelle 2 dargestellt.

**Tabelle 2:**

| Beispiel | F | G |
|---|---|---|
| Glasübergangstemperatur T_{g} (TMA)/°C | 181 | 180 |
| Biegefestigkeit (ISO 178)/MPa | 160 | 157 |
| Randfaserdehnung (ISO 178)/% | 9,1 | 8,95 |
| Biegefestigkeit (ASTM E 399-789)/J/m² | 238 | 210 |

## Patentansprüche

1. Homo- oder Copolyimide der Formel I, 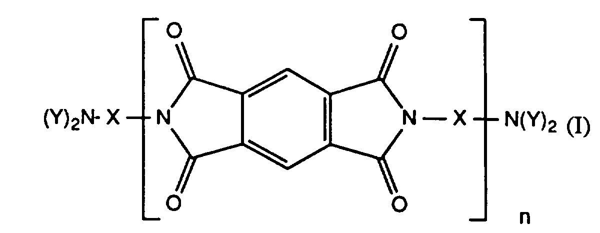 worin Y für Wasserstoff steht oder die an ein N-Atom gebundenen Substituenten Y zusammen einen zweiwertigen Rest der Formeln IIa bis IIc darstellen 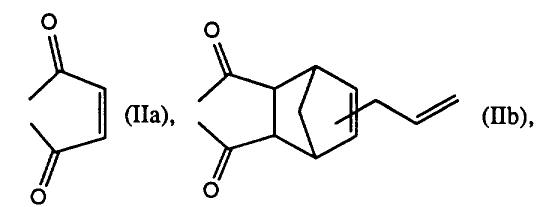 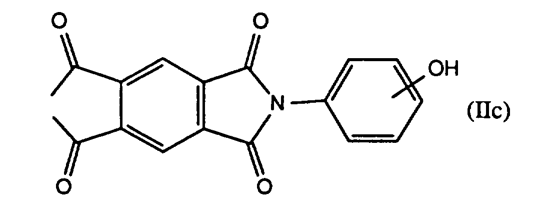 und X für einen Rest der Formel IIIa und/oder IIIb steht, 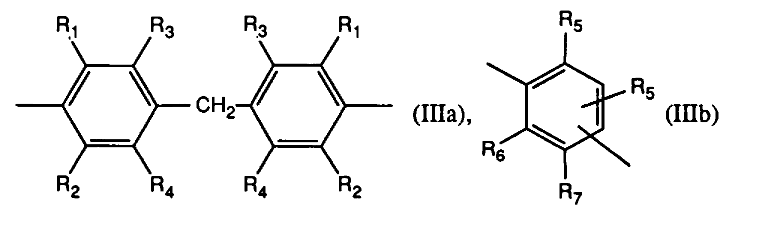 worin R₁ eine Alkyl-, Cycloalkyl-, Alkoxy-, Alkoxyalkyl- oder Aralkylgruppe darstellt oder zusammen mit dem Rest am benachbarten C-Atom einen Alkylenrest bildet, R₂ Wasserstoff ist oder eine der für R₁ angegebenen Bedeutungen hat, R₃ und R₄ unabhängig voneinander Wasserstoffatome sind oder zusammen mit R₁ bzw. R₂ einen Alkylenrest bilden, R₅ und R₆ unabhängig voneinander Alkyl-, Cycloalkyl-, Alkoxy-, Alkoxyalkyl-oder Aralkylgruppen darstellen oder zusammen mit einem Rest an einem benachbarten C-Atom einen Alkylenrest bilden, R₇ Wasserstoff ist oder eine der für R₅ und R₆ angegebenen Bedeutungen hat,
und worin n eine ganze Zahl zwischen 5 und 150 ist.

2. Polyimide gemäss Anspruch 1, worin n eine Zahl zwischen 10 und 70 ist.

3. Copolyimide gemäss Anspruch 1, worin das Strukturelement X zu 20 - 80 mol% aus einer Gruppe der Formel IIIa und zu 80 - 20 mol% aus einer Gruppe der Formel IIIb besteht.

4. Polyimide gemäss Anspruch 1, worin R₁ und R₂ unabhängig voneinander Alkylgruppen mit 1 bis 6 C-Atomen, bevorzugt Methyl-, Ethyl-, n-Propyl- oder Isopropylgruppen, darstellen und R₃ und R₄ jeweils Wasserstoff bedeuten.

5. Polyimide gemäss Anspruch 1, worin R₁ Ethyl und R₂ Methyl ist und R₃ und R₄ jeweils Wasserstoff bedeuten.

6. Polyimide gemäss Anspruch 1, worin R₁ Ethyl und R₂, R₃ und R₄ jeweils Wasserstöff bedeuten.

7. Polyimide gemäss Anspruch 1, worin R₅ und R₆ unabhängig voneinander Alkylgruppen mit 1 bis 6 C-Atomen, bevorzugt Methyl-, Ethyl-, n-Propyl- oder Isopropylgruppen, darstellen.

8. Polyimide gemäss Anspruch 1, worin die freien Bindungen in der Gruppe der Formel IIIb in meta-Stellung zueinander stehen.

9. Polyimide gemäss Anspruch 8, worin R₅ Ethyl, R₆ Methyl und R₇ Wasserstoff ist.

10. Polyimide gemäss Anspruch 1, worin die freien Bindungen in der Gruppe der Formel IIIb in para-Stellung zueinander stehen und R₅, R₆ und R₇ Methyl sind.

11. Verfahren zur Herstellung von Homo- oder Copolyimiden der Formel I gemäss Anspruch 1, dadurch gekennzeichnet, dass man ein aromatisches Diamin der Formel IVa oder IVb, 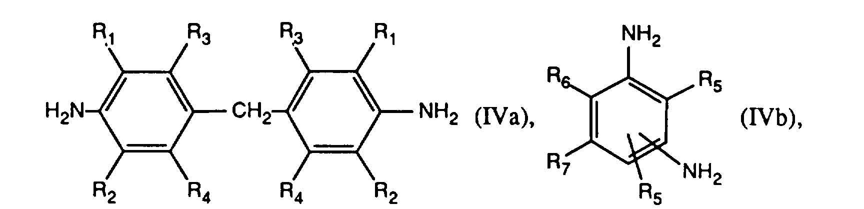 worin die Reste R₁ bis R₇ die in Anspruch 1 angegebene Bedeutung haben, oder ein Gemisch der Diamine der Formeln IVa und IVb mit Pyromellitsäuredianhydrid allein oder mit einem Gemisch aus Pyromellitsäuredianhydrid und einer Verbindung ausgewählt aus der Gruppe bestehend aus Maleinsäureanhydrid, Allylnadicanhydrid und Aminophenol umsetzt und die erhaltene Polyamidsäure unter Zugabe eines Schleppmittels thermisch imidisiert.

12. Zusammensetzungen enthaltend
a) mindestens ein Epoxid-, Bismaleinimid- oder Triazinharz
b) einen Härter und/oder Härtungsbeschleuniger für Epoxid-, Bismaleinimid- oder Triazinharze
c) ein Polyimid der Formel I gemäss Anspruch 1.

## Claims

1. A homo- or copolyimide of formula I 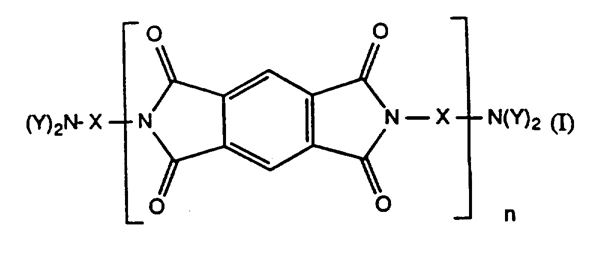 wherein Y is hydrogen or the substituents Y, bonded on an N atom, are together a divalent radical of formulae IIa to IIc 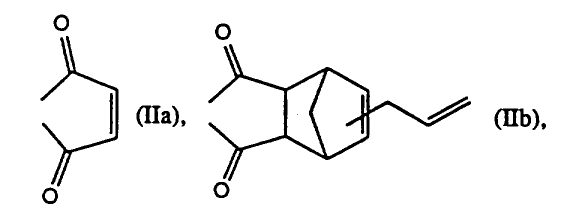 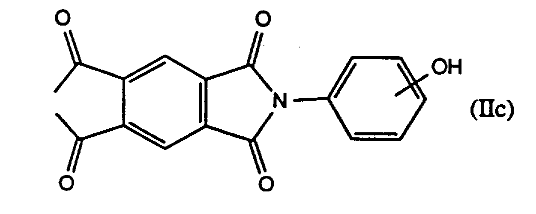 and X is a radical of formula IIIa and/or IIIb 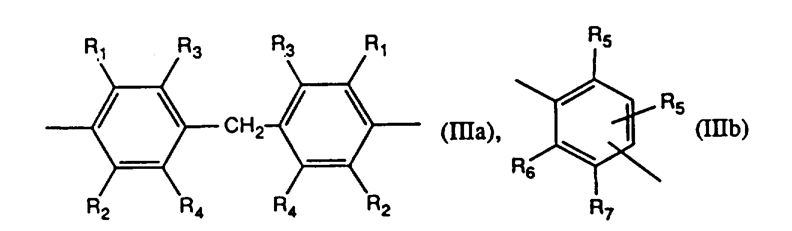 wherein R₁ is an alkyl, cycloalkyl, alkoxy, alkoxyalkyl or aralkyl group or, together with the radical at the adjacent C atom, forms an alkylene radical, R₂ is hydrogen or has one of the meanings given for R₁, R₃ and R₄ are each independently of the other hydrogen atoms or, together with R₁ or R₂, form an alkylene radical, R₅ and R₆ are each independently of the other alkyl, cycloalkyl, alkoxy, alkoxyalkyl or aralkyl groups or, together with a radical at an adjacent C atom, form an alkylene radical, R₇ is hydrogen or has one of the meanings given for R₅ and R₆, and wherein n is an integer from 5 to 150.

2. A polyimide according to claim 1, wherein n is an integer from 10 to 70.

3. A copolyimide according to claim 1, wherein the structural element X consists of 20-80 mol% of a group of formula IIIa and 80-20 mol% of a group of formula IIIb.

4. A polyimide according to claim 1, wherein R₁ and R₂ are each independently of the other C₁-C₆alkyl groups, preferably methyl, ethyl, n-propyl or isopropyl groups, and R₃ and R₄ are each hydrogen.

5. A polyimide according to claim 1, wherein R₁ is ethyl and R₂ is methyl and R₃ and R₄ are each hydrogen.

6. A polyimide according to claim 1, wherein R₁ is ethyl and R₂, R₃ and R₄ are each hydrogen.

7. A polyimide according to claim 1, wherein R₅ and R₆ are each independently of the other C₁-C₆alkyl groups, preferably methyl, ethyl, n-propyl or isopropyl groups.

8. A polyimide according to claim 1, wherein the free bonds in the group of formula IIIb are in meta-position to one another.

9. A polyimide according to claim 8, wherein R₅ is ethyl, R₆ is methyl and R₇ is hydrogen.

10. A polyimide according to claim 1, wherein the free bonds in the group of formula IIIb are in para-position to one another and R₅, R₆ and R₇ are each methyl.

11. A process for the preparation of a homo- or copolyimide of formula I according to claim 1, which comprises reacting an aromatic diamine of formula IVa or IVb 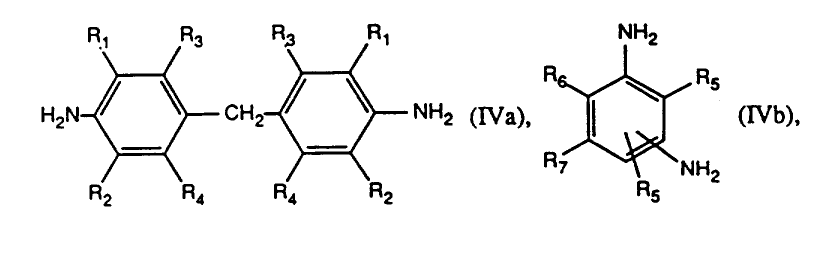 wherein the radicals R₁ to R₇ are as defined in claim 1, or a mixture of the diamines of formulae IVa and IVb, with pyromellitic dianhydride by itself or with a mixture of pyromellitic dianhydride and a compound selected from the group consisting of maleic anhydride, allylnadic anhydride and aminophenol, and subjecting the resultant polyamic acid to thermal imidisation by adding an entrainer.

12. A composition comprising
a) at least one epoxy, bismaleimide or triazine resin,
b) a hardener and/or curing accelerator for epoxy, bismaleimide or triazine resins, and
c) a polyimide of formula I according to claim 1.

## Revendications

1. Homo- ou copolyimides de formule I 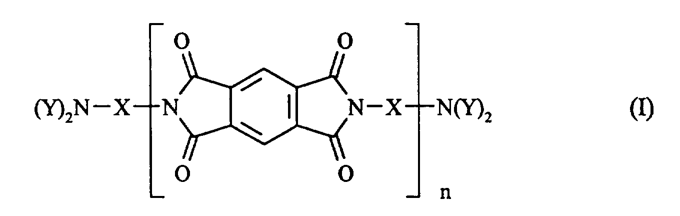 dans laquelle Y représente un atome d'hydrogène, ou les substituants Y liés à un atome d'azote forment ensemble un reste divalent ayant les formules IIa à IIc: 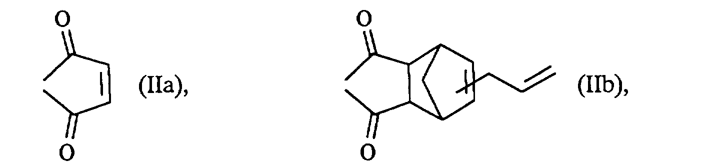 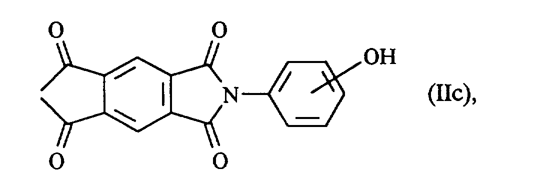 et X représente un reste de formule IIIa et/ou IIIb 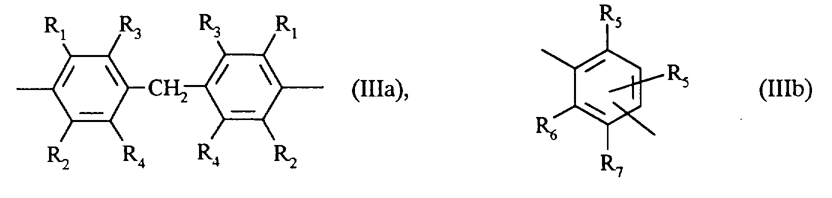 où R₁ représente un groupe alkyle, cycloalkyle, alcoxy, alcoxyalkyle ou aralkyle ou forme avec le reste lié à l'atome de carbone adjacent un reste alkylène; R₂ est un atome d'hydrogène ou a l'une des significations données pour R₁; R₃ et R₄ représentent indépendamment l'un de l'autre des atomes d'hydrogène ou forment avec respectivement R₁ ou R₂ un reste alkylène; R₅ et R₆ représentent indépendamment l'un de l'autre des groupes alkyle, cycloalkyle, alcoxy, alcoxyalkyle ou aralkyle ou forment avec le reste lié à un atome de carbone adjacent un reste alkylène; R₇ est un atome d'hydrogène ou a l'une des significations données pour R₅ et R₆;
et n est un nombre entier compris entre 5 et 150.

2. Polyimides selon la revendication 1, dans lesquels n est un nombre compris entre 10 et 70.

3. Copolyimides selon la revendication 1, dans lesquels l'élément de structure X est constitué à 20-80 % en moles d'un groupe de formule IIIa et à 80-20 % en moles d'un groupe de formule IIIb.

4. Polyimides selon la revendication 1, dans lesquels R₁ et R₂ représentent indépendamment l'un de l'autre des groupes alkyle de 1 à 6 atomes de carbone, de préférence des groupes méthyle, éthyle, n-propyle ou isopropyle, et R₃ et R₄ sont chacun un atome d'hydrogène.

5. Polyimides selon la revendication 1, dans lesquels R₁ est un groupe éthyle et R₂ un groupe méthyle, et R₃ et R₄ sont chacun un atome d'hydrogène.

6. Polyimides selon la revendication 1, dans lesquels R₁ est un groupe éthyle et R₂, R₃ et R₄ sont chacun un atome d'hydrogène.

7. Polyimides selon la revendication 1, dans lesquels R₅ et R₆ représentent indépendamment l'un de l'autre des groupes alkyle de 1 à 6 atomes de carbone, de préférence des groupes méthyle, éthyle, n-propyle ou isopropyle.

8. Polyimides selon la revendication 1, dans lesquels les liaisons libres du groupe de formule IIIb se trouvent en position méta l'une par rapport à l'autre.

9. Polyimides selon la revendication 8, dans lesquels R₅ est un groupe méthyle, R₆ un groupe méthyle et R₇ un atome d'hydrogène.

10. Polyimides selon la revendication 1, dans lesquels les liaisons libres du groupe de formule IIIb se trouvent en position para l'une par rapport à l'autre et R₅, R₆ et R₇ sont des groupes méthyle.

11. Procédé de préparation d'homo- ou copolyimides de formule I selon la revendication 1, caractérisé en ce que l'on fait réagir une diamine aromatique de formule IVa ou IVb 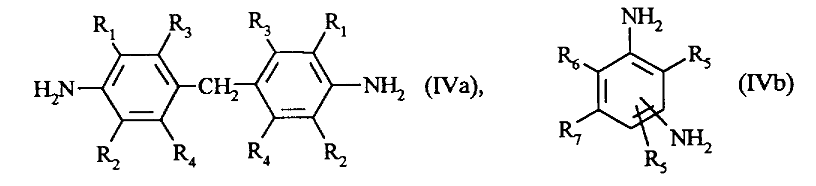 où les restes R₁ à R₇ ont la signification donnée dans la revendication 1, ou un mélange de diamines de formule IVa et IVb, avec du dianhydride pyromellitique seul, ou avec un mélange de dianhydride pyromellitique et d'un composé choisi dans le groupe constitué par l'anhydride maléique, un anhydride allylnadique et un aminophénol, et on forme par voie thermique l'imide du poly(acide-amide) obtenu en ajoutant un agent d'entraînement.

12. Compositions contenant
a) au moins une résine époxy, une résine maléimide ou une résine triazinique,
b) un durcisseur et/ou un accélérateur de durcissement pour des résines époxy, des résines maléimide ou des résines triaziniques,
c) un polyimide de formule I selon la revendication 1.
